(19) Europäisches Patentamt

European Patent Office

Office européen des brevets

(11) **EP 1 698 847 A1**

(12) **EUROPEAN PATENT APPLICATION**

(43) Date of publication:
06.09.2006 Bulletin 2006/36

(51) Int Cl.:
*F28C 1/14* (2006.01)    *F28F 27/00* (2006.01)
*F28C 3/08* (2006.01)

(21) Application number: **05002487.6**

(22) Date of filing: **07.02.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicants:
• **Hippocrates, Dambassinas
56121 Ampelokipi
Thessaloniki (GR)**

• **Dambassinas, Dimitris
56121 Ampelokipi
Thessaloniki (GR)**

(72) Inventors:
• **Hippocrates, Dambassinas
56121 Ampelokipi
Thessaloniki (GR)**
• **Dambassinas, Dimitris
56121 Ampelokipi
Thessaloniki (GR)**

(54) **Hybrid adiabatic heat exchange system**

(57)    A system of extracting heat is disclosed, which may be arranged as a hybrid adiabatic fluid cooler or as a hybrid adiabatic fluid condenser. Two heat exchange sections are provided: a dry forced convection finned heat exchange section (2) and a direct contact heat exchange section (24) that operates in either wet or dry mode. Process fluid circulates through the dry forced convection finned heat exchange section (2). An air stream passes through the direct contact heat exchange section (24) before entering the dry forced convection finned heat exchange section (2). The system can operate in two different modes to extract heat from the process fluid. At low temperatures, the system operates dry and heat is rejected by the dry forced convection heat exchange section (2). At higher temperatures, evaporative liquid is distributed over the direct contact heat exchange section (24) and the air stream is first adiabatically saturated with evaporative liquid to pre-cool the air below its dry bulb temperature before entering the dry forced convection finned heat exchange section (2). A humidity/temperature sensor (19) monitors the air conditions before entering the dry forced convection finned heat exchange section and controls the flow of the evaporative liquid. The system does not re-circulate the evaporative liquid and, therefore, has no sump.

FIG. 1

EP 1 698 847 A1

**Description**

(a) Technical Field to which invention relates.

A Hybrid Adiabatic Heat Exchange System for extracting heat from a process fluid comprising a discharge air plenum; a process fluid inlet; a process fluid outlet; a dry forced convection finned heat exchange apparatus with an air inlet side to receive ambient air, an air outlet side to discharge air into the discharge plenum and a process fluid circuit connected to receive process fluid from the process fluid inlet to the process fluid outlet; an air moving device to create current of air moving in counter flow direction to the process fluid circuit and discharge it to the atmosphere.

(b) Relevant prior art.

Waste heat in a fluid may be rejected to the atmosphere by dry forced convection heat exchangers. In such systems a forced air stream cools down the process fluid stream. Since there is no direct contact between the two fluid streams these are closed systems. In a closed system the process fluid stream is not open to the atmosphere, but circulates within the pipes of a heat exchanger. The air stream passes through the external heat exchanger surface and sensible heat is rejected from the process fluid stream to the air stream. If the process fluid involves a single-phase liquid or gas, these machines are known in the art as "dry fluid coolers". If the process fluid involves a two-phase or a multi-phase fluid, these machines are known in the art as "air cooled condensers".

The limiting factor to the application of dry fluid coolers and air-cooled condensers is the dry bulb temperature of the ambient air. During the summer months, or in hot climates, closed circuit evaporative heat exchangers offer significant efficiency improvements over dry fluid coolers or air-cooled condensers, as they reject heat at temperatures approaching the lower ambient wet bulb temperatures. In such closed circuit evaporative heat exchangers three fluid streams are involved: the process fluid stream enclosed in the pipes of the heat exchanger, the air stream and an evaporative water stream. In a typical evaporative cooling machine the water stream is contained in a sump at the bottom of the machine and the water is sprayed over the bare pipes of the heat exchanger by means of a circulated pump. The portion of the water, which evaporates during the process, is made-up in the sump by a fresh supply of city water in most cases.

The existence of a sump in a not well-maintained evaporative cooling machine has the risk of proliferation of Legionella bacteria in the re-circulating water. Strict legislation has been enacted already in the U.K., France and Spain, according to which such installations must be registered and maintenance records must be kept. These legal requirements necessitated the development of systems that they could avoid the risk of Legionella Disease by offering the advantage of the operation of a dry fluid heat exchanger, but at a temperature lower than the ambient dry bulb temperature. For that purpose dry fluid coolers and air-cooled condensers were recently introduced in the marketplace, in which a water spray cools adiabatically the incoming air stream. These systems can be distinguished to those where the ambient space surrounding the dry fluid cooler or air cooled condenser at the air entry is sprayed by water, and those where the dry forced convection heat exchanger surface itself is spayed by water, which evaporates when it contacts the forced air stream. These systems succeed in lowering the temperature of the air stream and, therefore, increase the efficiency of the forced convection heat exchanger, but they have significant disadvantages:

a. Where the incoming ambient air is sprayed before it comes into contact with the dry forced convection heat exchanger surface, this is accomplished by spraying water onto a mesh fixed in front of the dry forced convection heat exchanger, which provides an evaporation surface. By spraying water into the open space, so that the incoming air will pick up some of this moisture, there is no control over the amount of moisture that it will come into contact with the air stream. A portion of the air stream before entering the dry forced convection heat exchanger may come into contact with the wetted mesh, another portion may meet the spray itself and finally some air will enter the dry forced convection heat exchanger without been in contact with the water at all. In all cases there cannot be any calculation of the saturation efficiency of the spraying system and, therefore no prediction of the overall capacity of the dry forced convection heat exchanger. Consequently such systems can only be effectively used in existing installations, applied as additional kits to boost their capacity.

b. Where the dry forced convection heat exchanger surface itself is spayed by water, this water must be de-mineralized, otherwise the dry forced convection heat exchanger surface, which in most cases is that of a finned coil, will soon be blocked by scale formation. A de-mineralizing water system is quite expensive and could be justified only in very large installations. Even then the atmospheric pollutants will soon clog the finned surface, as the sprayed water continuously washes the air.

(c) Technical Problem to be solved

The object of the present invention is to provide a heat exchange system and method that enhances a dry forced convection heat exchange system with the efficiency of evaporative cooling, by devising a hybrid adiabatic cooling machine in which the air stream when entering the machine enclosure is first adiabatically saturated with moisture in a controlled and pre-determined manner, so that by the removal of sensible heat its dry bulb temperature is lowered before it comes into contact with the finned surface of the dry forced convection heat exchanger. The evaporative fluid will carry no heat from the process fluid and substantial evaporative fluid savings shall be achieved, as compared to a conventional closed circuit evaporative machine. In addition, such a machine will not use recirculated water and thus avoid the risks of Legionnaires' Disease.

(d) Disclosure of invention.

The invention achieves this object for a hybrid adiabatic heat exchange system of above type by providing a cooling pad in which ambient air enters and it is adiabatically saturated with moisture and it is discharged into an air plenum before entering the dry forced convection finned heat exchange apparatus; a distribution manifold to supply the evaporative liquid, such as city water; a distribution water pad to distribute the city water evenly on the cooling pad surface; a gutter to drain any water left after the evaporation process; an automated control system to control the wetting rate of the cooling pad with city water, comprising a humidity-temperature sensor to determine the conditions of the air before entering the dry forced convection finned heat exchange section and a control mechanism to regulate the city water flow, by means of humidity and temperature controllers.

The system also provides a housing comprising an air inlet plenum, between the dry forced convection finned heat exchange apparatus and the cooling pad, which surrounds the incoming air stream, and therefore, the conditions of the air before it enters the dry forced convection finned heat exchange apparatus can be monitored and regulated.

In the product that it is the object of the present invention there is no evaporative liquid sump in which the Legionella bacteria may be proliferated, but the evaporative liquid only wets the cooling pad material in an automated control way, so that only a small portion of the evaporative liquid is wasted to the drain, after it washes the cooling pad surfaces.

(e) Advantageous effects of invention.

The advantages of the product that is the object of the present invention are the following:

o The performance of the machine can be calculated, based on the flow rates of the respective fluids and their temperatures. Furthermore, these performances can be certified in an accredited Test Laboratory, because as the heat exchanger is totally enclosed by the machine's casing, ambient air can only be drawn into the enclosure through the cooling pad and, therefore, the whole process is strictly controlled. Hence, during the evaporative process the air approaches the state of complete saturation. The degree of saturation, or Saturation Efficiency, is a measure of the cooling pad efficiency. It can be considered to represent that portion of the air passing through the cooling pad, which contacts the evaporative fluid surface. The efficiency of the cooling pad is dependent on the surface available and on the time available for the air to contact the evaporative fluid surface. The time available for contact depends on the velocity of the air through the cooling pad. Once the air volume and the air velocity are selected, the pad saturation efficiency can be determined from the pad's manufacturer's data. Therefore, the dry bulb temperature of the air leaving the pad can accurately be determined and finally the overall heat exchanger's capacity can be predicted.

o As the flow of evaporative fluid, city water for example, over the cooling pad is controlled both manually and automatically, the rate of any water, which does not evaporate and is drained through the gutter, is kept to an absolute minimum. Therefore, there is no need for a sump and recirculation of water. The absence of a sump diminishes the risk of Legionnaire's Disease.

A sensor of high accuracy monitors the conditions of the air stream leaving the cooling pad. Once the design conditions are satisfied the evaporative fluid flow to the cooling pad is interrupted and water waste is avoided.

o Applying the values of the coincident dry bulb and wet bulb temperatures of the location for which the heat exchanger is selected optimizes the size of the selected hybrid adiabatic heat exchanger. This is because when selecting a dry forced convection heat exchanger it is the dry-bulb temperature that matters and for an evaporative heat exchanger only the wet-bulb temperature matters. For a hybrid adiabatic heat exchange system, however, both the dry-bulb and the wet-bulb temperatures are equally important, because their combination determines the leaving dry-bulb temperature of the air exiting the evaporative process before it enters the dry forced convection heat exchanger. There is, however, an appreciable difference between the design wet-bulb temperature taken for an evaporative heat exchanger selection, as compared to the coincident wet-bulb temperature occurring when the design dry-bulb temperature for a dry forced convection heat exchanger selection is considered. This coincident wet-bulb temperature is always much lower than the design wet-bulb temperature for the same location. The reason is obvious: the design wet-bulb temperature is the maximum wet bulb encountered, but for the maximum design dry bulb temperature the coincident wet bulb is always much lower, because at high dry bulb conditions the relative humidity is always at minimum. Assuming a moderate saturation efficiency of the cooling pad of 66%. achieved with a selected velocity of 2.7 m/s, various entering air conditions were taken in ascending design dry bulb order, for different European locations and the resulting leaving dry bulb temperature ($T_{ldb}$) were calculated by use of the equation:

$$t_{ldb} = t_{edb} - (Saturation\ Efficiency) \cdot (t_{edb} - t_{ewb})$$

| Design Dry-bulb (Tedb) °C | Relative Humidity % | Coincident Wet-bulb (Tewb) °C | Saturation efficiency % | (Tldb) °C | (Tedb) - (Tldb) | Design Wet-bulb °C | Country | Town |
|---|---|---|---|---|---|---|---|---|
| 24,3 | | 17,7 | 0,66 | 19,94 | 4,36 | 18,6 | IRELAND | Kilkenny |
| 25,0 | | 17,2 | 0,66 | 19,85 | 5,15 | 18,2 | DENMARK | Copenhagen |
| 25,7 | | 17,5 | 0,66 | 20,29 | 5,41 | 18,5 | UK | Birmingham |
| 25,9 | | 17,6 | 0,66 | 20,42 | 5,48 | 18,7 | FINLAND | Helsinki |
| 26,5 | | 17,4 | 0,66 | 20,49 | 6,01 | 18,4 | NORWAY | Oslo |
| 26,8 | | 17,1 | 0,66 | 20,40 | 6,40 | 18,4 | SWEDEN | Stockholm |
| 27,4 | | 18,7 | 0,66 | 21,66 | 5,74 | 19,6 | UK | London |
| 28,0 | | 20,2 | 0,66 | 22,85 | 5,15 | 21,1 | BELGIUM | Antwerp |
| 28,3 | | 19,2 | 0,66 | 22,29 | 6,01 | 20,3 | NETHERLANDS | Eindhoven |
| 28,8 | | 18,4 | 0,66 | 21,94 | 6,86 | 19,7 | CZECHIA | Prague |
| 29,0 | | 19,7 | 0,66 | 22,86 | 6,14 | 21,0 | POLAND | Warsaw |
| 29,9 | | 20,3 | 0,66 | 23,56 | 6,34 | 21,4 | FRANCE | Paris |
| 29,9 | | 18,8 | 0,66 | 22,57 | 7,33 | 20,1 | GERMANY | Berlin |
| 30,1 | | 20,1 | 0,66 | 23,50 | 6,60 | 21,1 | AUSTRIA | Vienna |
| 30,1 | | 19,1 | 0,66 | 22,84 | 7,26 | 20,0 | SWITZERLAND | Geneva |
| 30,8 | | 23,3 | 0,66 | 25,85 | 4,95 | 26,1 | ITALY | Roma |
| 32,1 | | 20,3 | 0,66 | 24,31 | 7,79 | 21,4 | GERMANY | Heidelberg |
| 32,1 | | 20,4 | 0,66 | 24,38 | 7,72 | 21,4 | HUNGARY | Budapest |
| 33,0 | | 21,1 | 0,86 | 25,15 | 7,85 | 23,0 | FRANCE | Toulouse |
| 33,0 | | 22,0 | 0,66 | 25,74 | 7,26 | 23,6 | ROMANIA | Bucharest |
| 33,2 | | 21,2 | 0,66 | 25,28 | 7,92 | 22,9 | GREECE | Thessaloniki |
| 33,8 | | 21,7 | 0,66 | 25,81 | 7,99 | 25,7 | CYPRUS | Larnaca |
| 33,8 | | 23,7 | 0,66 | 27,13 | 6,67 | 24,9 | ITALY | Bologna |
| 34,1 | | 20,6 | 0,66 | 25,19 | 8,91 | 23,8 | GREECE | Athens |
| 34,1 | | 20,7 | 0,66 | 25,26 | 8,84 | 22,7 | PORTUGAL | Lisbon |
| 36,0 | | 20,7 | 0,66 | 25,90 | 10,10 | 21,9 | SPAIN | Madrid |
| 37,0 | | 19,6 | 0,66 | 25,52 | 11,48 | 21,2 | SPAIN | Granada |
| 39,8 | | 23,7 | 0,66 | 29,17 | 10,63 | 24,6 | SPAIN | Sevilla |

(Source; AHRAE - FUNDAMENTALS 2001. *Dry-bulb temperature corresponding* to *0.4% annual cumulative frequency of occurrence and the mean coincident wet-bulb tempereture)*

It is noted that for cold climates, like Ireland's, the resulting $t_{ldb}$ is lower about 4°K than the ambient dry bulb temperature, but for hot climates like Spain's the difference rises to above 11°K.

At EUROVENT (The European Committee of Air Handling and Air Conditioning Equipment Manufacturers) conditions (40°/35°C *entering/leaving fluid temperature and 25°C entering air temperature*) there is an average 35% capacity increase with Adiabatic Saturation. For countries with colder climates and an approach of about 10°K (difference between leaving fluid temperature and entering dry-bulb temperature) and a range of 5°K, capacity increases of that order are anticipated. Ireland, Denmark, Finland, Norway, Sweden and parts Finland, Norway, Sweden and parts of the UK fall in that category. For countries with hotter climates and always assuming the same approach of about 10°K and same range of 5°K, the capacity increase when using Adiabatic Saturation is much higher and can reach 92% for Granada in Spain when the ambient dry-bulb is at 37°C.

o Evaporative fluid savings for a hybrid adiabatic heat exchange system are significant, because the evaporative liquid carries no heat from the process fluid. In a typical dosed circuit evaporative cooling tower, evaporative liquid consumption is essentially independent of specific ambient weather conditions and is about 1.8 litre of water per 4186 kilojoules (kJ). Use of the present invention could result in a saving of about 90% of the water that it would be used in the conventional evaporative product. In general, the heat rejection may not be constant throughout the year, but substantial water savings will still be achievable.

Thus, with the hybrid adiabatic heat exchange system and methods of the present invention, energy and evaporative liquid may both be conserved.

(f) Brief Description of the Drawings

In the following drawings, like reference numbers are used for the like parts:

FIG. 1 is a side view of a hybrid adiabatic heat exchange system, with parts shown in schematic and with part of the heat exchange apparatus housing removed to illustrate the interior of the machine.

FIG. 2 is a schematic perspective view of the exterior of a hybrid adiabatic heat exchange system incorporating the principles of the present invention.

FIG.3 is a schematic temperature profile showing the change of the process fluid and the air stream when the hybrid heat exchanger operates in dry mode.

FIG.4 is a schematic temperature profile showing the change of the process fluid stream and the air stream when the hybrid adiabatic heat exchange system of the present invention operates in dry mode with adiabatic saturation.

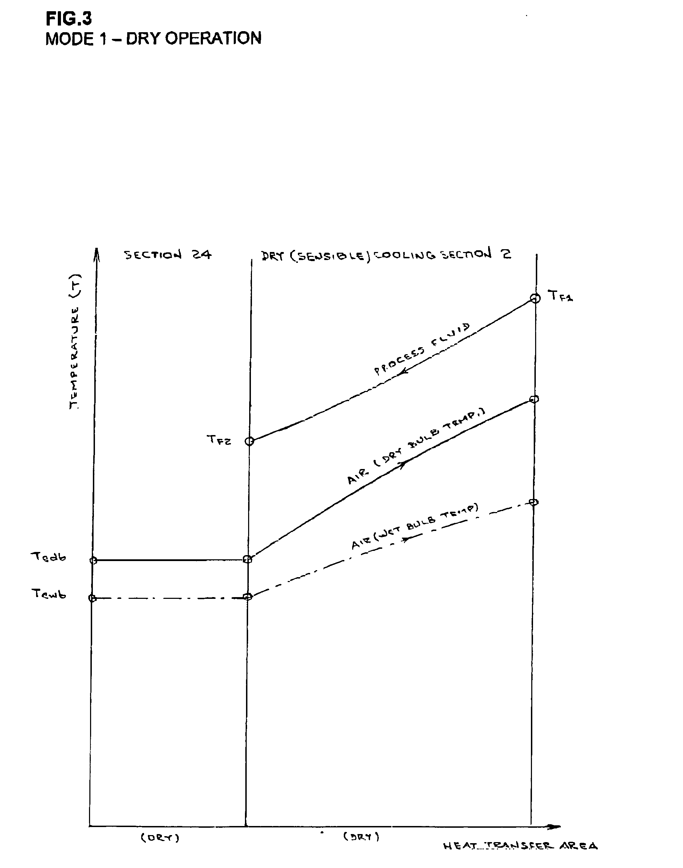

It should be understood that in FIGS. 3 - 4, the relative areas of the heat exchange sections 24 , 2 , along the horizontal axes, are not drawn to scale.

(g) Description of at least one way of carrying out invention with reference drawings.

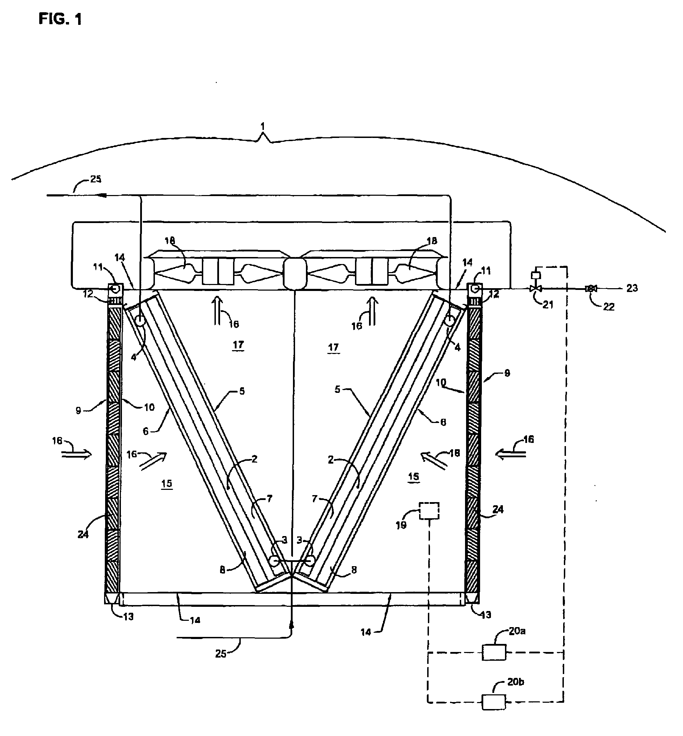

The invention is elucidated by reference to an embodiment in conjunction with FIG.1, which is a side view of a hybrid adiabatic heat exchange system. Part of the heat exchanger apparatus housing is removed to illustrate the interior of the machine. The hybrid adiabatic heat exchange system **1** includes a dry forced convection finned heat exchange apparatus **2** (shown in two parts) for extracting heat from a process fluid. The dry forced convection finned heat exchange apparatus **2** includes a process fluid inlet **3,** connected to receive process fluid from an external device (not shown), such as industrial process equipment. After heat is rejected from the process fluid in the dry forced convection finned heat exchange apparatus **2,** the process fluid exits through a process fluid outlet **4.** The process fluid may involve a single phase liquid, such as water, that is received through the inlet **3** and discharged through the outlet **4** at a lower temperature. Alternatively, the process fluid may involve a single-phase gas that is received through the inlet **3** and discharged through the outlet **4** at a lower temperature. Thus, the hybrid adiabatic heat exchange system **1** may involve a fluid cooling system. The hybrid adiabatic heat exchanger system **1** may also involve a condensing system, in which case the process fluid may involve a two-phase or a multi-phase fluid at the inlet 3 that is discharged from the outlet **4** as a single-phase liquid or a mixture of liquid and gas for a multi-phase fluid. Thus, the hybrid adiabatic heat exchange system **1** may involve a fluid condensing system.

The hybrid adiabatic heat exchange system **1** of the FIG.1 embodiment includes a dry forced convection finned heat exchange section **2** (shown in two parts). This dry heat exchange section has an air inlet side **6,** and an air outlet side **5** and a process fluid circuit shown as **25.** This fluid circuit 25 includes an inlet header **7,** an outlet header **8,** a plurality of tubes on which a plurality of fins are expanded on the outside of the tubes. The dry forced convection finned heat exchange section 2 may involve a commercially available finned coil sold by Dambassinas-Thermopsiktiki S.A. of Thessaloniki, Greece, as part 16W-1006 with 5/8 in. x 0.43 mm wall copper tubes and 0.19 mm corrugated aluminium fins. It should be stated that this finned coil is identified for purposes of illustration only, and the invention is not limited to this particular heat transfer coil. Two or more of such commercially available coils may be connected in parallel to comprise the dry forced convection finned heat exchange section 2. Fig.1 shows two such finned coils in parallel arrangement. The combination of coils may vary with product size.

The cooling pad section **24** of the FIG.1 embodiment serves as an adiabatic saturator to cool the incoming air. This cooling pad section has an air inlet side 9 and an outlet air side **10.** It consists of specially impregnated and corrugated cellulose paper sheets with different flute angles, one steep (for example 60 deg) and one nearly flat (for example 30 deg) that have been bonded together. Such a design yields a cooling pad with high evaporation efficiency while still operating with a very low pressure drop. The impregnation procedure for the cellulose paper ensures a strong self supporting product, with high absorbance, which is protected against decomposition and rotting. Circuit **23** supplies the evaporative fluid, such as city water, to a distribution manifold **11** and the rate of the water flow may be initially regulated by a manual regulating valve **22.** A distribution pad **12** on the top of the cooling pad ensures an even water distribution and minimizes the risk of dry spots. The water flows down the corrugated surface of the evaporative cooling pad **24.** The incoming warm and dry air that passes through the pad evaporates most of the water. Any remaining water assists in washing the pad, and is drained to the gutter **13.** In addition scaling is kept to a minimum and no water carry-over occurs due to the fact that the water is directed to the air inlet side **9** of the pad and this where the evaporation takes place. At the outer air side **10** the air that leaves the pad is therefore cooled and humidified simultaneously without any external energy supply, thus adiabatically. The cooling pad surface may involve a commercially available evaporative pad sold by Munters Europe AB of Sollentuna, Sweden, as part CELdek 7090-15. It should be stated that this evaporative cooling pad surface is identified for purposes of illustration only, and the invention is not limited to this particular evaporative cooling pad.

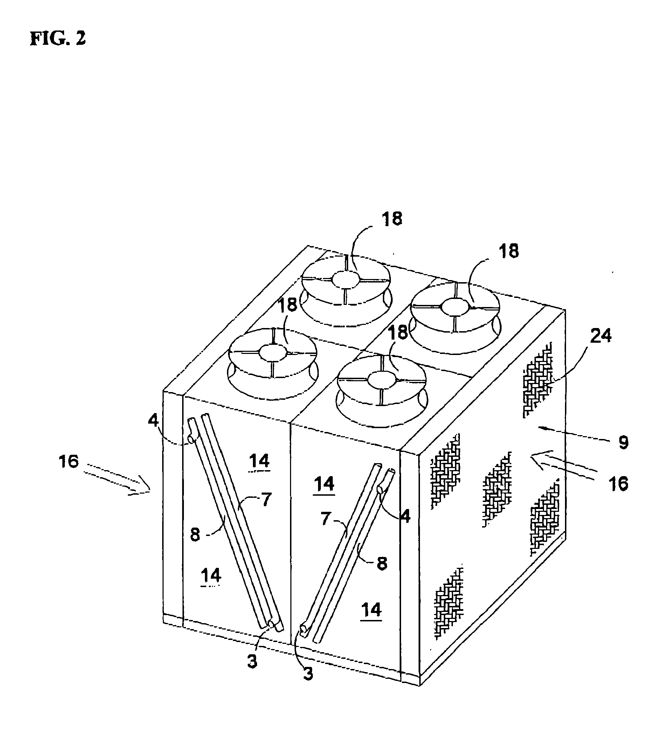

The heat exchange system **1** of the FIG.1 embodiment also includes a housing **14** that substantially surrounds the dry forced convection finned heat exchanger apparatus **2,** the cooling pad section **24,** the suction plenum **15** and the discharge plenum **17,** all of these elements being within the hybrid adiabatic heat exchange system **1.** As shown in FIGS. 1 and 2 the hybrid adiabatic heat exchange system apparatus housing includes opening 9 for the ambient air stream **16** to pass through the cooling pad **24,** into the plenum **15,** through the dry heat exchange section **2** to the discharge plenum **17.**

To move the air stream **16** through the cooling pad **24,**and the dry direct contact heat exchanger **2,** the hybrid adiabatic heat exchange system **1** includes an air-moving device **18.** The air-moving device consists of multiple numbers of motorized fans positioned on top of the housing **14** and downstream of the dry direct contact heat exchanger **2.** Other air-moving systems may also be used.

In order to accurately control the air conditions entering the finned dry forced convection heat exchange section **2** and thus pre-determine the anticipated capacity of the hybrid adiabatic heat exchange system **1,** a control system is employed which monitors both the temperature and the relative humidity of the air after the saturation process. It consists of a duct sensor **19** to determine the relative humidity and temperature. The sensor acquires relative humidity via its capacitive sensing element whose capacitance varies as a function of the relative humidity of the ambient air. An electronic circuit converts the sensor's signal to a continuous DC 0...10V signal, corresponding to a relative humidity of 0...100%. The sensor **19** acquires the temperature via its sensing element whose electrical resistance varies according to the temperature of the ambient air. The variation is converted to an active DC 0...10V output signal, corresponding to the temperature range of 0... 50 °C. The sensor **19** is connected to fully autonomous electronic universal controllers **20a** and **20b,** as sequence controllers, to control the relative humidity and the temperature, respectively, with auxiliary functions, such as set point compensation, minimum and maximum limitation, etc., by actuating a control mechanism **21**, such as a solenoid valve, as shown in dashed line in FIG. 1 between the sensor **19** the controllers **20a** and **20b** and the control mechanism **21.** The relative humidity set-point of sensor **19** is set at a value near the saturation point and controls the control mechanism **21** which feeds the distribution manifold 11 of the cooling pad **24.** If the air leaving the cooling pad **24** has reached the pre-set relative humidity value, then the control mechanism **21** closes and the water supply to the manifold is interrupted. The duct sensor **19** acting also as a low limit temperature sensing element will override the humidity sensing element and close the control mechanism **21,** if the air temperature entering the dry forced convection finned heat exchanger **2** drops to a pre-determined level (say 20°C). The duct sensor **19** may comprise, for example, a QFM 3160 Duct Sensor for relative humidity (high accuracy) and temperature, available from SIEMENS. The autonomous electronic universal controllers **20a** and **20b** may comprise, for example, RWD68 universal controllers available from SIEMENS. It should be understood that these devices are identified for illustration purposes only and the invention is not limited to these devices. Other similar sensors and controllers from any other major control manufacturer may be used as well.

The hybrid adiabatic heat exchange system **1** may be made by adding the cooling pad section **24,** the housing **14,** and the flow control system **19, 20a, 20 b and 21,** to a standard finned dry forced convection heat exchanger commercially available from Dambassinas-Thermopsiktiki S.A., Thessaloniki, Greece, as the series VDFCX dry fluid cooler, or the series VACCX air cooled condenser. Alternatively, the hybrid adiabatic heat exchange system 1 may be made independently.

The hybrid adiabatic heat exchange system **1** of the present invention is operable in two modes. In the Dry Mode 1, at lower ambient dry bulb temperatures, such as the temperatures below 20°C for example, process fluid to be cooled is supplied through the process fluid inlet **3** to the inlet header **7,** which distributes it through the tubes of the dry forced convection finned heat exchanger. As the process fluid traverses the fluid circuit **25** of the dry forced convection finned heat exchange apparatus **2,** the air moving device **18** moves the air stream **16** through the air inlet side **6** and over the external heat exchange surface of the dry forced convection finned heat exchanger **2** to cool the process fluid. The air stream leaves the dry forced convection finned heat exchanger from the air outlet side **5** and through the plenum **17** is discharged to the atmosphere via the air moving device **18**. After the process fluid has been cooled is received in the outlet header **8** and flows to the process fluid outlet **4.**

The effects of operation of the system in Mode 1 are graphically illustrated in the temperature profiles shown in FIG.3. As it is shown, the process fluid enters the finned dry forced convection heat exchange apparatus **2** through the fluid inlet **3** at an initial inlet temperature $T_{F1}$ and exits from the fluid outlet **4** at a final temperature $T_{F2}$. The air stream **16** enters the cooling pad **24** from the air inlet side **9** and in dry operation exits from side **10** at a constant dry bulb temperature $T_{edb}$ and wet bulb temperature $T_{ewb}$. The air stream then enters the dry heat exchange apparatus **2** from the inlet side 6. The air stream **16** dry bulb temperature increases as the air stream **16** and process fluid exchange heat in the finned dry forced convection heat exchange apparatus **2.** FIG.3 also shows the corresponding wet bulb temperatures of the air stream **16** in the sections of the hybrid adiabatic heat exchange system **1** in dashed lines to indicate that in this mode of operation, the dry bulb temperatures of the air stream are the driving forces. The air stream while being heated remains at constant absolute air humidity.

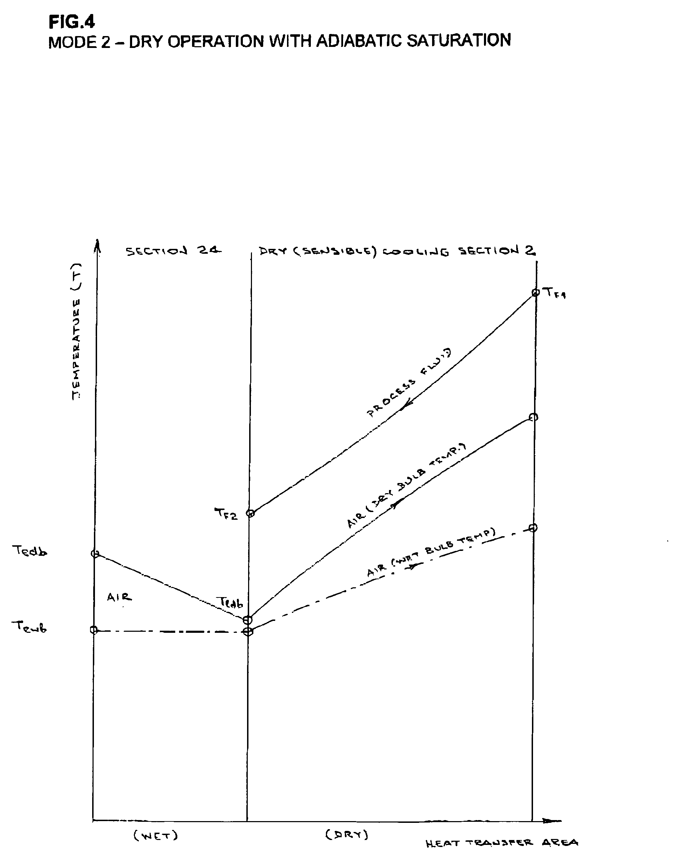

In the embodiment of FIG.1 in the second Adiabatic Mode **2** of operation, the ambient dry air temperature is higher, for example 20°C and the cooling pad section **24** operates to adiabatically saturate the air stream **16** before it enters the plenum **15**. In this mode the cooling pad system **24** is activated, so that the water as the evaporative liquid is supplied to the distribution manifold **11** and through the distribution pad **12** wets the cooling pad **24.** In this mode of operation it is assumed that the temperature of the evaporating liquid equals the initial wet bulb temperature of the ambient air stream, shown as $T_{ewb}$ and remains constant. It should be noted that in most cases the city water would be at a lower temperature than that of the ambient air before it meets the air stream. Since this is hard to evaluate and in any case it will only improve the performance of the cooling pad, it is for all practical purposes neglected in the temperature profiles of the schematic diagram. As the air stream **16** is saturated, its dry bulb temperature will drop, as it exits from the outer side **10** into the plenum **15,** from the initial value $T_{edb}$ towards the lower wet bulb temperature $T_{ewb}$. The extend of the approach of the $T_{edb}$ value to the $T_{ewb}$ value depends on the saturation efficiency of the cooling pad surface. The saturation efficiency can be considered to represent that portion of the air passing through the cooling pad, which contacts the water surface. The efficiency of the cooling pad is dependent on the surface available and on the time available for the air to contact the water surface. The time available for contact depends on the velocity of the air through the cooling pad. The absolute humidity of the air stream **16** increases as it saturates along the wet bulb temperature $T_{ewb}$. The dry bulb temperature $T_{ldb}$ leaving the cooling pad at the air stream exit **10** will be operative force in the dry forced convection finned heat exchanger **2,** as indicated by the solid line in FIG.4. The dry bulb and wet bulb temperatures of the air stream **16** will increase in the dry sensible heat exchange section **2,** as shown in FIG.4, while the absolute humidity will remain constant. Since the evaporative liquid substantially saturates the air stream, all of the air entering the dry forced convection finned heat exchange section **2** is pre-cooled below the ambient dry bulb temperature $T_{edb}$ and cooling in the dry forced convection finned heat exchanger is greatly enhanced. And since the evaporative liquid carries no heat from the process fluid, loss of evaporative liquid through evaporation is minimized to conserve the evaporative liquid. The process fluid in FIG.4 is cooled in the dry forced convection finned heat exchange section **2** from an initial temperature $T_{F1}$ to a temperature $T_{F2}$. Because of the lower entering air dry bulb temperature $T_{ldb}$, the capacity of the dry forced convection finned heat exchange section 2 rises significantly for a given entering fluid temperature $T_{F1}$ and given range ($T_{F1}$ - $T_{F2}$),

With the present invention, the hybrid adiabatic heat exchange system **1** may be operated in Mode 1 as a dry apparatus, with no evaporative liquid used for the winter and intermediate seasons. When the ambient dry bulb temperature rises for example above 20°C, the heat exchange system may be operated in Mode **2,** with adiabatic saturation and minimal losses of evaporative liquid.

It should be understood that the changeover temperature for operation between the two modes is given for purposes of illustration only. The actual changeover temperature between the two modes may instead depend on the process fluid temperature or pressure demand downstream of the dry forced convection finned heat exchange section **2.** The actual period of time of each mode of operation will depend on the particular annual temperature profile for the location and on the design changeover dry bulb temperature or pressure, for which the hybrid adiabatic heat exchange system **1** was sized. The change between the two modes can be through automatic controls, as described above, or through a manual process.

**Claims**

1. A Hybrid Adiabatic Heat Exchange System for extracting heat from a process fluid comprising a discharge air plenum **(17);** a process fluid inlet **(3);** a process fluid outlet **(4);** a dry forced convection finned heat exchange apparatus **(2)** with an air inlet side **(6)** to receive ambient air, an air outlet side **(5)** to discharge air into the discharge plenum **(17)** and a process fluid circuit connected to receive process fluid from the process fluid inlet **(3)** to the process fluid outlet **(4);** an air moving device **(18)** to create current of air moving in counter flow direction to the process fluid circuit and discharge it to the atmosphere,
**characterized in that** a cooling pad **(24)** is provided, in which ambient air enters through an air inlet **(9)** and it is adiabatically saturated with moisture and an air outlet side **(10)** through which the saturated air is discharged into the air plenum **(15)** before entering the dry forced convection finned heat exchange apparatus **(2);** a distribution manifold **(11)** to supply the evaporative liquid, such as city water; a distribution water pad **(12)** to distribute the city water evenly on the cooling pad surface; a gutter **(12);** a housing **(14)** is provided comprising an air inlet plenum **(15),** between the dry forced convection finned heat exchange apparatus **(2)** and the cooling pad **(24),** which surrounds the incoming air stream **(16),and** therefore, the conditions of the air before it enters side **(6)** of the dry forced convection finned heat exchange apparatus **(2)** can be monitored and regulated; an automated control system to control the wetting rate of the cooling pad with city water, comprising a humidity-temperature sensor **(19)** to determine the conditions of the air before entering the dry forced convection finned heat exchange section **2** and a control mechanism **(21)** to regulate the city water flow, by means of the humidity and temperature controllers **(20a)** and **(20b).**

2. A Hybrid Adiabatic Heat Exchange System according to claim 1,
**characterized in that** there is no evaporative liquid sump, as in evaporative cooling machines, or in some adiabatic coolers with spray systems, but the evaporative liquid only wets the material of the cooling pad **(24)** in an automated controlled way, so that only a small portion of the evaporative liquid is wasted to the drain, after it washes the cooling pad surfaces.

**FIG. 1**

**FIG. 2**

**FIG.3**
MODE 1 – DRY OPERATION

FIG.4
MODE 2 – DRY OPERATION WITH ADIABATIC SATURATION

EP 1 698 847 A1

13

European Patent
Office

**EUROPEAN SEARCH REPORT**

Application Number

EP 05 00 2487

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 90/15299 A (JAEGGI AG BERN) 13 December 1990 (1990-12-13) * figures * | 1,2 | F28C1/14 F28F27/00 F28C3/08 |
| A | EP 0 730 131 A (GEA-ERGE-SPIRALE ET SORAMAT) 4 September 1996 (1996-09-04) * figures * | 1,2 | |
| A | FR 1 289 617 A (SPRUNCK) 6 April 1962 (1962-04-06) * figures * | 1,2 | |
| A | US 4 114 683 A (VERLINDEN ET AL) 19 September 1978 (1978-09-19) * figures 4,7 * | 1,2 | |
| A | GB 1 559 329 A (MARLEY CO) 16 January 1980 (1980-01-16) * figure 10 * | 1,2 | |
| | | | **TECHNICAL FIELDS SEARCHED (Int.Cl.7)** |
| | | | F28C F28F |

The present search report has been drawn up for all claims

| Place of search | Date of completion of the search | Examiner |
|---|---|---|
| Munich | 14 July 2005 | Mellado Ramirez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 00 2487

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2005

| Patent document cited in search report | | Publication date | Patent family member(s) | | Publication date |
|---|---|---|---|---|---|
| WO 9015299 | A | 13-12-1990 | AT<br>WO<br>DE<br>EP | 94978 T<br>9015299 A1<br>59002837 D1<br>0428647 A1 | 15-10-1993<br>13-12-1990<br>28-10-1993<br>29-05-1991 |
| EP 0730131 | A | 04-09-1996 | EP | 0730131 A1 | 04-09-1996 |
| FR 1289617 | A | 06-04-1962 | NONE | | |
| US 4114683 | A | 19-09-1978 | FR<br>BE<br>DE<br>IT<br>NL<br>ZA | 2362358 A1<br>856904 A1<br>2708408 A1<br>1076673 B<br>7703137 A<br>7704719 A | 17-03-1978<br>18-01-1978<br>23-02-1978<br>27-04-1985<br>21-02-1978<br>26-07-1978 |
| GB 1559329 | A | 16-01-1980 | NONE | | |

EPO FORM P0459

For more details about this annex : see Official Journal of the European Patent Office, No. 12/82